Europäisches Patentamt

(19) European Patent Office

Office européen des brevets

(11) EP 0 777 094 A2

(12) EUROPEAN PATENT APPLICATION

(43) Date of publication:
04.06.1997 Bulletin 1997/23

(51) Int. Cl.$^6$: **F28D 9/00**

(21) Application number: 96118887.7

(22) Date of filing: 25.11.1996

(84) Designated Contracting States:
DE GB IT SE

(30) Priority: 29.11.1995 JP 311028/95

(71) Applicant: **MITSUBISHI DENKI KABUSHIKI KAISHA**
Tokyo 100 (JP)

(72) Inventors:
• **Arai, Hidemoto**
Chiyoda-ku, Tokyo 100 (JP)

• **Sugiyama, Yoichi**
Chiyoda-ku, Tokyo 100 (JP)
• **Fujishiro, Akihiro**
Chiyoda-ku, Tokyo 100 (JP)
• **Akita, Hiroyuki**
Chiyoda-ku, Tokyo 100 (JP)
• **Doi, Akira**
Chiyoda-ku, Tokyo 100 (JP)

(74) Representative: **Pfenning, Meinig & Partner**
Mozartstrasse 17
80336 München (DE)

(54) **Heat exchanging element**

(57) A heat exchanging element comprising a sheet (2), and a corrugated portion (20) formed on the sheet, characterized in that the sheet is zigzag bent in a layered structure to provide a first air flow passage (30) and a second air flow passage (31) which carry out heat exchange therebetween.

FIGURE 3

# Description

The present invention relates to a heat exchanging element which is used in a heat exchanger type ventilating device or an air conditioning unit.

Working or living spaces in e.g. buildings for offices, apartments and town houses have been air conditioned in a wide range, increasing energy consumption for air conditioning. This creates a vital issue in that the energy consumption for air conditioning can be decreased to save energy. A heat exchanging element which carries out heat exchange between indoor air and outdoor air can save energy in an air conditioning unit by recovering the heat lost in ventilating a room. As an air conditioning and ventilating unit using such a heat exchanging element, there has been known a unit which is disclosed in e.g. JP-B-4719990. In order to make use of the working or living spaces more effectively, miniaturization of the ventilating device or the air conditioning unit has been highly required in recent years. Miniaturization of the heat exchanging element is an important issue.

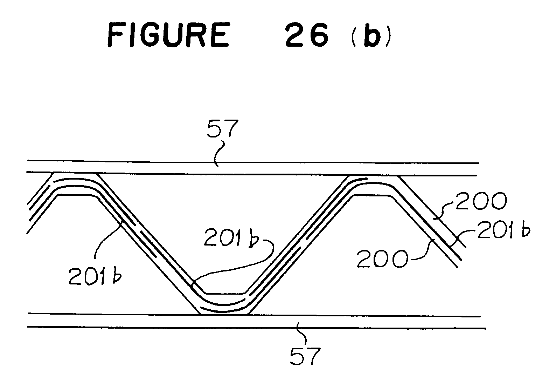

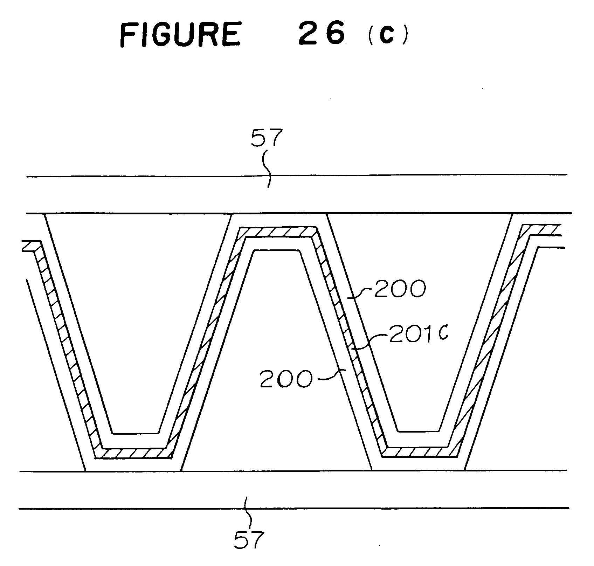

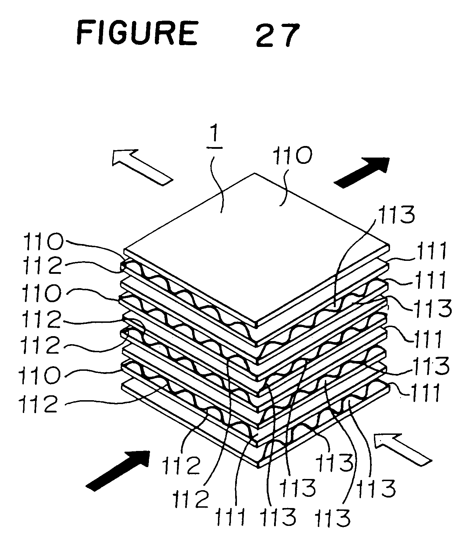

A conventional heat exchanging element is designed so that air supplied from outdoor is substantially perpendicular to air discharged from indoor as shown in Figure 27. In Figure 27, reference numeral 1 designates the heat exchanging element, reference numeral 110 designates flat partitions which are made of a material having heat-conducting ability and moisture permeability, and reference numeral 111 designates spacers which have a corrugated form in section. The partitions 110 and the spacers 111 are alternately layered, and the respective spacers 111 are arranged to be turned through 90° with respect to their adjoined spacers. Reference numeral 112 and 113 designate supplied air openings and discharged air openings, respectively, which are formed by layering.

The supplied air from outdoor is flowed in a direction indicated by shaded arrows, and discharged air from indoor is flowed in a direction indicated by unshaded arrows to carry out heat exchange, recovering heat. The heat exchange is carried out primarily through the partitions 110, and the area which is effective in the heat exchange includes the area of the partitions and small portions of the spaces. The primary function of the spacers 111 is to provide required spaces between adjoining partitions 110. The reason why the small portions of the spacers 111 contribute to the heat exchange is that such portions of the spacers work as fins for the partitions.

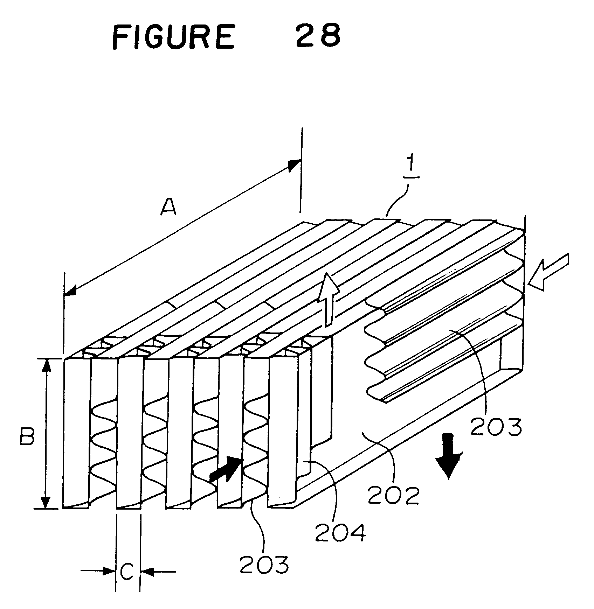

It is known that use of an opposed flow heat exchanger where supplied air and discharged air flow in opposite directions can obtain higher heat exchanging efficiency without increasing the heat-conducting area in comparison with the conventional cross flow heat exchanger shown in Figure 27. Proposal for miniaturization of the heat exchanging element in such an opposed flow heat exchanger has been disclosed in e.g. JP-A-5822893. In Figure 28, there is shown a perspective view of a schematic structure of the heat exchanging element according to the proposal. In this Figure, reference numeral 202 designates a partition, reference numeral 203 designates spacers on inlet sides, and reference numeral 204 designates spacers on outlet sides.

The heat exchanging element 1 is constituted by the partition 202 and the spacers 203 and 204, and the partitions and the spacers are alternately layered. The supplied air indicated by shaded arrows enters at the front side on Figure 28 and flows out downwardly. The discharged air enters at the rear side on this Figure and then flows out upwardly at the front side on this Figure as indicated in unshaded arrows. The supplied air and the discharged air are arranged in an opposed flow pattern through the partition 202 to carry out heat exchange.

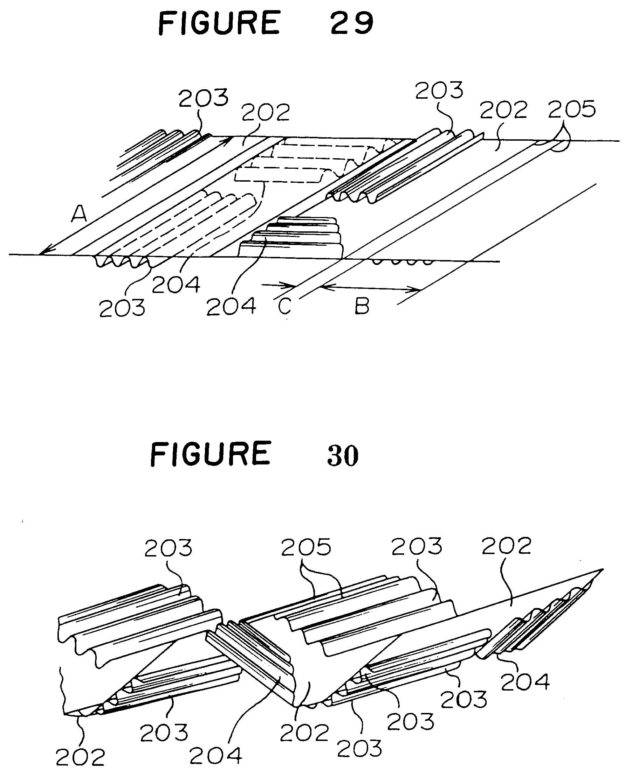

In Figure 29, there is shown a view of the partition 202 of the heat exchanging element 1 which is unfolded. In this conventional example, a sheet having a width A is used as the partition 202. The partition 202 is an elongated article, and the partition 202 has the spacers 203 on the respective inlet sides and the spacers 204 on the respective outlet sides bonded to opposed surfaces thereof. As shown in Figure 29, the partition 202 has pairs of the spacers 203 and the spacers 204 alternately bonded to the opposed surfaces. The partitions has pairs of folds 205 arranged thereon so that the folds in each pair are apart from each other by a gap C between a portion thereof with spacers 203 and 204 bonded thereon and having a length B, and it adjoining portion with spacers 203 and 204 bonded thereon and having a length B. The partition 202 is zigzag bent at the folds 205 to form the heat exchanging element 1 shown in Figure 28.

In Figure 30, it is shown what positions the spacers 203 and 204 occupy during zigzag bending the partition 202 at the folds 205. Because the partition 202 is folded at predetermined intervals and layered, the pairs of the spacers 203 and 204 have to be alternately bonded on the opposed surfaces of the partition. Such an arrangement does not allow the spacers 203 and 204 to be continuous parts, respectively. The respective spacers are required to individually bonded. This means that there is an increase in the number of required parts for fabrication of the heat exchanging element and that discontinuous bonding processes are required.

In the heat exchanging element 1 shown in Figure 28, the spacers 203 and 204 have a primary function to hold a space for the partition 202, and the supplied air and the discharged air carries out little heat exchange through the spacers 203 and 204. The area which is effective for heat exchange includes the flat partition 202 and small portions of the spacers 203 and 204. This means that a significant advantage can not be obtained though the crossflow structure can make the size smaller.

Since the conventional heat exchanging elements have been constructed as stated earlier, the heat exchanging element shown in Figure 28 wherein the supplied air and the discharged air flow in the opposite directions and the partition is zigzag bent in the layered structure involves two main problems. One is that the supplied air and the discharged air carry out heat exchange through the flat partition but carry out no heat exchange through the corrugated spacers. The main purpose of the spacers is to ensure a required space for the partition to provide the air flow passages, which creates a problem in that only a small heat exchanging area is obtained in single use of the flat partition for heat exchange.

The other is that the spacers for ensuring the required space are separable parts each other. It creates problems in that an increase in the number of parts required for the spacers raises cost, and that production is difficult because the spacers are individually and alternately bonded to the opposed surfaces of the partition.

It is an object of the present invention to eliminate the problems, and to provide a heat exchanging element having good heat exchanging efficiency between supplied air and discharged air. It is another object of the present invention to provide a heat exchanging element which requires a small number of parts, which is easily fabricated, and which can ensure to provide spaces required for forming air flow passages. The present invention provides a heat exchanging element which comprising a sheet and a corrugated portion formed on the sheet, wherein the sheet is zigzag bent in a layered structure to provide a first air flow passage and a second air flow passage which carry out heat exchange therebetween.

The corrugated portion may be continuously formed on the sheet.

The sheet may comprise corrugated surface portions and flat surface portions, each corrugated surface portion having the corrugated portion formed thereon, the corrugated surface portions and the flat surface portions being alternately layered.

The corrugated portion may have corrugations formed at predetermined intervals.

Bend end surfaces of the sheet which is zigzag bent may be in parallel with the passages formed at the corrugated portion.

The corrugated portion may have opposed leading edges of the corrugations tapered.

The sheet may have a surface in parallel with a corrugating direction of the corrugated portion formed with smaller corrugations than the corrugated portion.

The number of the smaller corrugations may be odd times that of the corrugations of the corrugated portion.

The sheet may have a side edge formed with side edge corrugations to provide spaces for the passages.

The side edge corrugations may have a corrugating direction in parallel with that of the corrugated portion.

The side edge corrugations may have a corrugating direction perpendicular to that of the corrugated portion.

The corrugated portion may have corrugations formed so that the first and second passages formed by the corrugated portion can have air flows equalized therein.

The corrugated portion may have the respective corrugations pinched to be crushed by a predetermined length from the top of the respective corrugations over the entire length of the passages.

The corrugated portion may have the respective corrugations formed so that one of adjoining passages has a longer pinched portions than the other passage.

The corrugated portion, and portions of the sheet which get in touch with the corrugations of the corrugated portion in the layered structure have convexed portions and concave portions formed thereon so as to be engaged each other.

The sheet may have metal members included therein.

The metal members may be one of aluminum, iron, copper, stainless steel and nickel.

The metal members may be formed in one of a predetermined width of foil, thin wire or mesh.

The invention will now be described by way of example and with reference to the accompanying drawings in which:

Figure 1 is a schematic perspective view showing the heat exchanging element according to a first embodiment of the present invention;

Figure 2 is a perspective view showing a part of the partition shown in Figure 1, which has been unfolded;

Figure 3 is a vertical sectional view taken along the line III-III of Figure 1;

Figure 4 is a vertical sectional view taken along the line IV-IV of Figure 1;

Figure 5 is a perspective view of the section at the line III-III of Figure 1;

Figure 6 is a cross-sectional view showing a ceiling mounted and concealed type total heat exchanging unit with the heat exchanging element according to the invention incorporated thereinto;

Figure 7 is a schematic perspective view showing the heat exchanging element according to a second embodiment of the present invention;

Figure 8 is a perspective view of a portion of the partition shown in Figure 7, which has been unfolded;

Figure 9 is a vertical section taken along the line IX-IX of Figure 8;

Figure 10 is a vertical section taken along the line X-X of Figure 8;

Figure 11 is a vertical section of Figure 7 taken along the line IX-IX of Figure 8;

Figure 12 is a vertical section of Figure 7 taken along the line X-X of Figure 8;

Figures 13(a) and (b) are a plan view and a vertical section, respectively, showing the corrugated portion of the heat exchanging element according to a third embodiment of the present invention;

Figure 14 is a vertical section of a portion of the heat exchanging element according to a fourth embodiment of the present invention, corresponding to the section taken along the line X-X of Figure 8;

Figure 15 is comparative views of the fourth embodiment, corresponding to the sections taken along the line X-X and the line IX-IX of Figure 8;

Figure 16 is a perspective view showing a portion of the partition according to a fifth embodiment of the present invention, which has been unfolded;

Figure 17 is a perspective view showing a portion of the unfolded partition of another example according to the fifth embodiment;

Figure 18 is a perspective view showing a portion of the unfolded partition of another example according to the fifth embodiment;

Figure 19 is a schematic view showing flow distribution when the passages formed by the corrugated portion have the same shape;

Figure 20 is a vertical section of a portion of the heat exchanging element according to a sixth embodiment of the present invention;

Figure 21 is a schematic view showing the flow distribution in the heat exchanging element according to the sixth embodiment;

Figure 22 is a vertical section showing a portion of an example of the heat exchanging element according to a seventh embodiment of the present invention;

Figure 23 is a vertical section showing a portion of another example of the heat exchanging element according to the seventh embodiment of the present invention;

Figure 24 is a vertical section showing a cassette type total heat exchanging unit with the heat exchanging element according to the invention incorporated thereinto;

Figure 25 is a cross-sectional view showing a home heat exchanging unit with the heat exchanging element of the invention incorporated thereinto;

Figure 26(a) is a vertical section showing a portion of composite paper with metallic foil laminated thereon;

Figure 26(b) is a vertical section showing a portion of composite paper with metallic wires sandwiched between two sheets;

Figure 26(c) is a vertical section showing a portion of composite paper with a metallic mesh sandwiched between two sheets;

Figure 27 is a perspective view showing a conventional heat exchanging element;

Figure 28 is a perspective view showing another conventional heat exchanging element;

Figure 29 is a perspective view showing a portion of the heat exchanging element shown in Figure 27, which has been unfolded; and

Figure 30 is a schematic view showing how the unfolded heat exchanging element as shown in Figure 28 is bent.

EMBODIMENT 1:

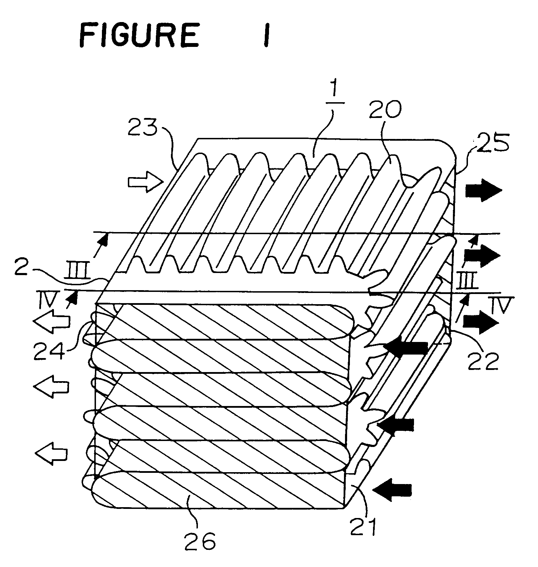

In Figure 1, there is shown a schematic perspective view of the heat exchanging element according to a first embodiment of the present invention. In this figure, parts identical or corresponding to those in the prior art are designated with the same reference numerals, and explanation of such parts will be omitted. In this figure, reference numeral 2 designates a partition which is formed by zigzag bending a single sheet at intervals of a suitable length so as to provide a layered structure. Reference numeral 20 designates a corrugated portion which is provided on the partition 2, which is shaped by corrugating opposed central surfaces of the sheet, and which has both central surfaces provided with passages extended from one side edge to the other side edge.

The partition 2 is zigzag bent to alternately arrange open ends and closed ends at both end portions of the heat exchange element 1. Reference numeral 21 designates a supplied air inlet which is provided in an open portion at a front side on the figure. The open portion is defined by the corrugated portion 20 at the open ends at one of the side portions of the heat exchanging element 1. Reference numeral 22 designates a supplied air outlet which is provided in an open portion at a rear side on the figure. The rear open portion is defined by the corrugated portion 20 at the open ends at the other side portion of the heat exchanging element. Reference numeral 23 designates a discharged air inlet which is provided in an open portion at a rear side on the figure. The opened portion with the discharged air inlet is defined by the corrugated portion 20 at the open ends at the other side portion of the heat exchanging element. Reference numeral 24 designates a discharged air outlet which is provided in an open portion at a front side on the figure. The open portion with the discharged air outlet is defined by the corrugated portion 20 at the open ends at the one side portion of the heat exchanging element. Reference numerals 25 and 26 designate side end seals which are separated from both side portions of the heat exchanging element corresponding to the side edges of the sheet, and which close both side portions.

Such arrangement allows supplied air passages as first air passages and discharged air passages as second air passages to be isolated by the partition 2, and the respective passages to ensure and obtain required gaps by only the partition 2 without help of spacers. Although a sine wave, a trapezoidal wave or a rectangular wave can be adopted as the wave form of the corrugated portion 20, the wave form of the corrugated portion is not limited to these wave forms. The point is that when the partition 2 is zigzag bent in the layered structure, the corrugated portion works as spacers to ensure the first air passages and the second air passages. In this embodiment, the corrugated portion is shaped in a wave form of corrugations which is used in e.g. corrugated paper and is good at strength.

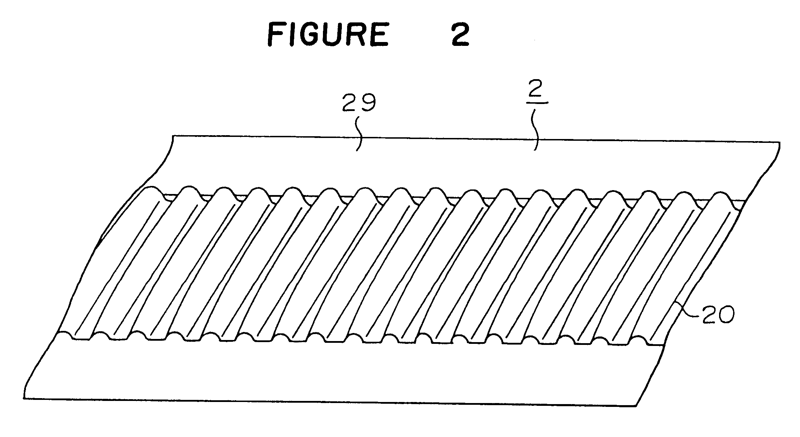

In Figure 2, there is shown a perspective view of a portion of the partition 2 constituting the heat exchanging element 1, which has been unfolded in a flat manner. In this figure, the partition 2 has the corrugated portion 20 continuously formed at a central portion of the sheet. The corrugated portion 20 is formed in such a manner that a flat sheet, such as Japanese paper and converted paper, which is commonly used as a heat exchanging element partition, has a central portion pressed to provide continuous corrugations without cutting the sheet into short pieces, thereby providing equal corrugations on both surfaces of the sheet. Reference numeral 29 designates flat side portions which are left flat on both sides of the sheet. Boarders between the corrugated portion 20 and the flat side portions 29 are formed so that leading portions of the corrugations in proximity to the flat side portions are tapered in order to prevent the sheet from being broken on shaping. If the sheet is too tough to be broken, it is not necessary to taper the leading portion of the corrugations.

The partition 2 according to this embodiment is formed so as to have an equal structure in its entirety. Since the partition is bendable at any locations, the sheet can be zigzag bent at any locations. As a result, forming the corrugated portion 20 can be successively carried out on the sheet. Whichever portion of the sheet is cut at to start zigzag bending, the heat exchanging element 1 can be fabricated to extremely facilitate manufacturing and working. The distance between adjoining corrugations is determined so that when the sheet is zigzag bent, the tops of confronting corrugations of the corrugated portion 20 contact with each other. When the sheet has been layered as stated, the tops of the confronting corrugations of the corrugated portion 20 are jointed together to provide the passages between the corrugations of the jointed corrugated portion 20.

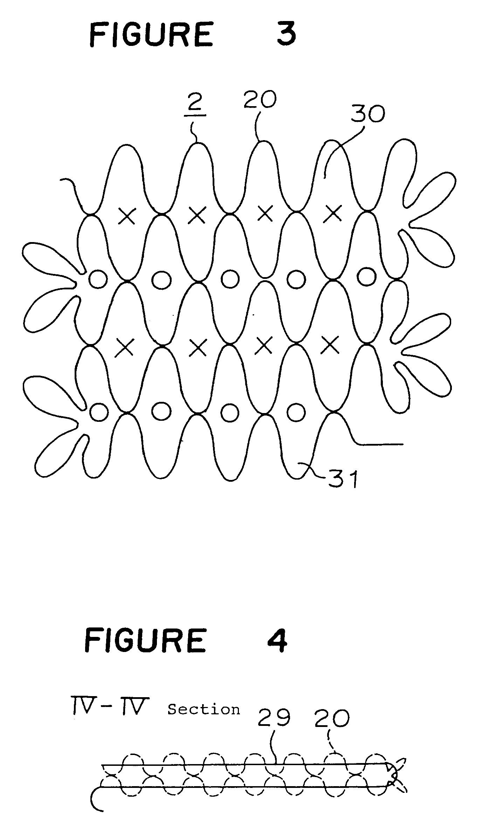

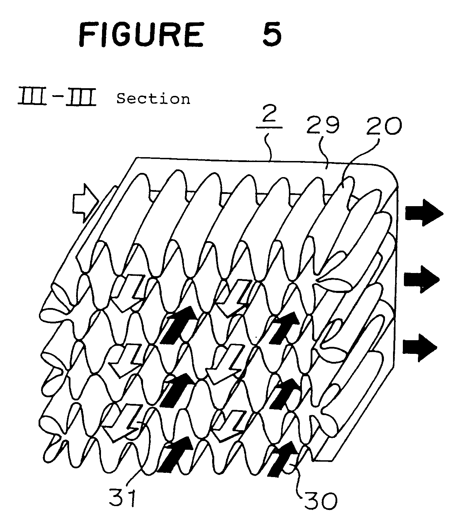

In Figure 3, there is shown a vertical section of the heat exchanging element 1 of Figure 1, taken along the line III-III. As shown in Figure 3, the corrugated portion 20 is formed so that the corrugations are repeated upwardly and downwardly on both surfaces with respect to the sheet plane, and that the tops of the confronting corrugations are jointed to alternately upwardly and downwardly provide the supplied air passages 30 (indicated by symbols "X") and the discharged air passages 31 (indicated by symbols "○") between the adjoining corrugations. The sheet has side portions at the front and rear sides in Figure 1 formed with the flat portions 29, and the shape of the flat portions is flat as shown in Figure 4 which is a vertical section taken along the line IV-IV of Figure 1. In Figure 5, there is shown a perspective view of the section of the heat exchanging element 1 taken along the line III-III of Figure 1. Portions of the zigzag bent corrugated portions 20 which are formed with folds have the passages therein crushed to be finally bonded to the sheet, increasing air tightness.

Because the heat exchanging element 1 is formed by zigzag bending the partition 2, each layer has one end closed. The side edges of the sheet are closed by the side end seals 25 and 26. Each layer has only an end portion remote from the zigzag bend fold worked as the open end. The heat exchanging element has the respective open ends and the respective zigzag bend folds alternately arranged in the vertical direction. The passages formed by the corrugated portion 20 are the ones that the respective passages have both ends communicated with respective open end portions through both flat portions 29. As shown in Figure 1, the supplied air passages are formed to extend from the supplied air inlet 21 to the supplied air outlet 22 through the corrugated portion 20, and the discharged air passages are formed to extend from the discharged air inlet 23 to the discharged air outlet 24 through the corrugated portion 20.

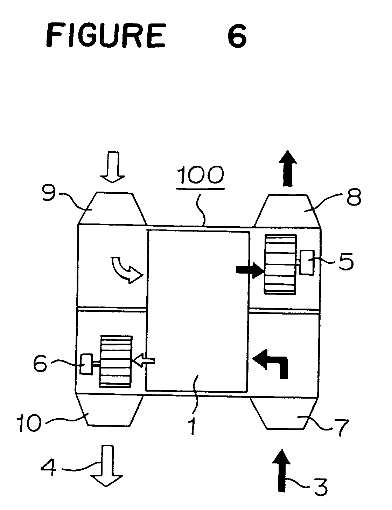

In Figure 6, there is shown a cross-sectional of a ceiling mounted and concealed type total heat exchanging unit with a heat exchanging element of Figure 1 incorporated thereinto. In this figure, reference numeral 100 designates a ceiling mounted and concealed type total heat exchanging unit main body. Reference numeral 1 designates the heat exchanging element which is incorporated into a central portion of the total heat exchanging unit. Reference numeral 5 designates an air supplying fan which is constituted by a centrifugal fan, and which has an inlet communicated with the supplied air outlet 22 of the heat exchanging element 1. Reference numeral 6 designates an air discharging fan which is constituted by a centrifugal fan, and which has an inlet communicated with the discharged air outlet 24 of the heat exchanging element 1. Reference numeral 7 designates a supplied air inlet port which is connected to outdoors, and which communicates with the supplied air inlet 21 of the heat exchanging element 1. Reference numeral 8 designates a supplied air outlet port which communicates with an outlet of the air supplying fan 5, and which is connected to indoors.

Reference numeral 9 designates a discharged air inlet port which is connected to indoors, and which communicates with the discharged air inlet 23 of the heat exchanging element 1. Reference numeral 10 designates a discharged air outlet port which communicates with an outlet of the air discharging fan 6, and which is connected to outdoors. Reference numeral 3 designates a supplied air flow, and reference numeral 4 designates a discharge air flow. Although not shown, the supplied air inlet port 7, the supplied air outlet port 8, the discharged air inlet port 9 and the discharged air outlet port 10 are connected to e.g. ducts to properly lead indoors and outdoors through duct piping.

In the total heat exchanging unit and the heat exchanging element 1 therein thus constructed, supplied air from outdoors flows from the supplied air inlet port 7 into the supplied air inlet 21 of the heat exchanging element 1, passes through the corrugated portion 20 and flows out of the supplied air outlet 22 to indoors through the supplied air outlet port 8. Discharged air from indoors flows from the discharged air inlet port 9 into the discharged air inlet 23 of the heat exchanging element 1, passes through the corrugated portion 20 and flows out of the discharged air outlet 24 to outdoors through the discharged air outlet port 10. At that time, the supplied air and the discharged air flow in opposite directions since the supplied air passages 30 and the discharged air passages 31 in the heat exchanging element 1 are divided by the partition 2 so as to be alternately arranged as clearly seen from the structure of the heat exchanging element shown in Figures 3 and 5.

When the supplied air and the discharged air flow in the heat exchanging element 1, the supplied air and the discharged air carry out heat exchange through the partition 2. According to the arrangement of the present invention, the partition 2 can be corrugated to increase a heat exchanging area per unit volume in comparison with the conventional flat partition, improving heat exchanging efficiency. Since the heat exchanging element is layered by using only the partition, machining and assembling are easy. The corrugated portion which works as spacers can be also contributed to heat exchange to go no waste. When the corrugated portion is continuously formed like this embodiment, cutting can be made at any locations. No need for intermittent pressing can facilitate production and decrease cost.

Since the zigzag bent end surfaces and the ridges of the corrugated portion extend in parallel, the side edges of the passages formed by the corrugated portion are sealed by folds in a seamless manner to improve airtightness. When opposite sides of the end portions which have the open ends and the folds alternately formed by zigzag bending work as the air inlets and the air outlets, and the supplied air and the discharged air turn at 90° to pass through the corrugated portion like this embodiment, the opposite sides of the end portions with the air inlets and the air outlets have no need for special sealing between the different air flow layers, facilitating production.

EMBODIMENT 2:

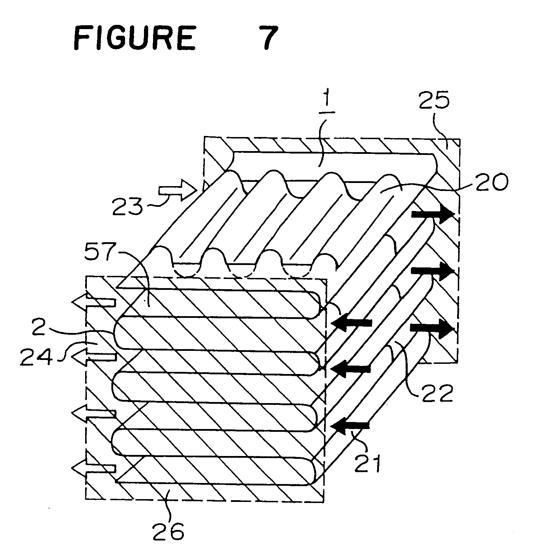

In Figure 7, there is shown a schematic perspective view of the heat exchanging element according to another embodiment of the present invention. In this figure, parts identical or corresponding to those in the first embodiment are designated with the same reference numerals, and explanation of such parts will be omitted. In this figure, reference numeral 2 designates a partition which is formed by zigzag bending a single sheet at intervals of a suitable length so as to provide a layered structure. Reference numeral 20 designates a corrugated portion which is provided on the partition 2. The corrugated portion 20 is shaped by corrugating opposed central surfaces of the sheet so as to provide corrugated sections in a longitudinal direction except for folds which are formed when the sheet is zigzag bent. The partition 2 is also provided with flat surface sections 57 between corrugated sections. The corrugated sections 20 and the flat surface portions 57 are alternately layered to ensure required gaps, having opposite surfaces of the sheet provided with passages extended from one side edge to the other side edge of the sheet.

Such arrangement allows the supplied air passages as the first air passages and the discharged air passages as the second air passages to be isolated by the partition 2, and the respective passages to be ensured only by the partition 2 without using spacers. Although the sine wave, a trapezoidal wave or a rectangular wave can be adopted as the wave form of the corrugated sections 20, the wave form of the corrugated sections is not limited to these wave forms. The point is that when the partition 2 is zigzag bent in the layered structure, the corrugated sections work as the spacers to ensure the first air passages and the second air passages. In this embodiment, the corrugated sections are shaped in a wave form of corrugations which is used in e.g. corrugated paper and is good at strength.

In Figure 8, there is shown a perspective view of a portion of the partition 2 constituting the heat exchanging element 1, which has been unfolded in a flat manner. In this figure, the partition 2 has a central portion of the sheet formed with the corrugated sections 20 with a certain number of continuous corrugations at intervals of a certain length. The corrugated sections 20 are formed in such a manner that a flat sheet, such as Japanese paper and converted paper, which is commonly used as a heat exchanging element partition, has a central portion intermittently pressed to provide the discontinuous corrugated sections without cutting the sheet into short pieces, thereby providing similar corrugations on both surfaces of the sheet. Reference numeral 29 designates the flat side portions which are left flat on both sides of the sheet. Boarders between the corrugated sections 20 and the flat side portions 29 may be formed so that leading portions of the corrugations in proximity to the flat side portions are tapered in order to prevent the sheet from being broken on shaping.

Reference numeral 57 designates the flat surface portions which are uncorrugated on the sheet, which has the same length as the corrugated sections 20, and which have a length equal to that of flat surface portions except for the folds which are formed when the sheet is zigzag bent. Reference numeral 28 designates a gap which works as a fold when the sheet is bent. The sheet shown in Figure 8 is formed so that the corrugated surface portions 27 with flat side portions 29 and a corrugated section 20, and the flat surface portions 57 are alternately arranged interposing each gap 28 therebetween so as to provide a cyclic chain. In order to prepare the partition 2, the sheet may be cut into pieces of a suitable length before being layered, or be cut after being layered.

In the partition 2 according to this embodiment, the corrugated surface portions 27 and the flat surface portions 57 are alternately layered by zigzag bending the partition at each gap 28, and the tops of the respective corrugations of the corrugated sections 20 are jointed to the flat surface portions 57 which the tops get in touch with when the corrugated surface portions and the flat surface portions are layered. Such arrangement can joint the tops of the respective corrugations and the flat surfaces without jointing the confronting tops of the corrugations like the first embodiment. As a result, jointing the corrugated sections does not require high accuracy unlike the first embodiment, facilitating assembly. Since the second embodiment have no need for spacers like the first embodiment, manufacturing and machining can be carried out in an extremely easy manner.

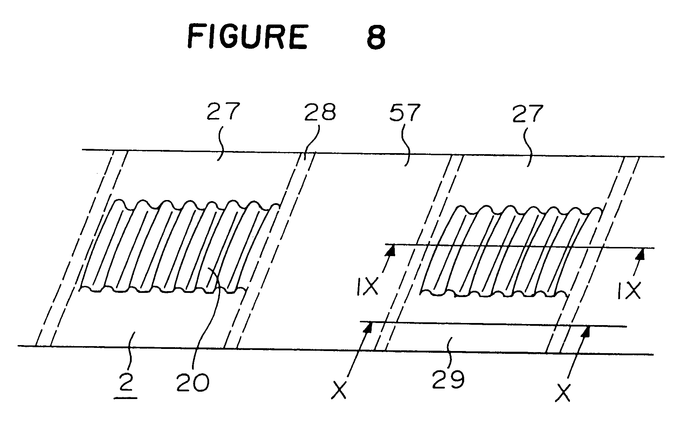

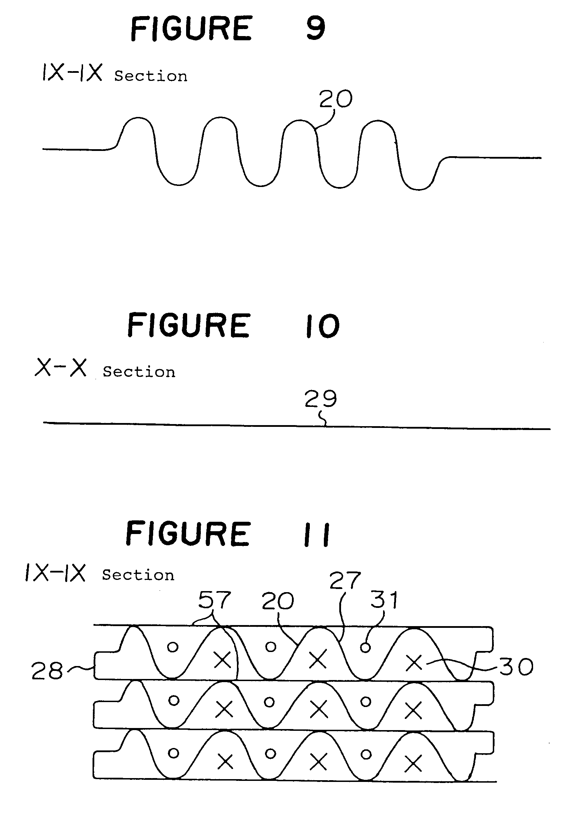

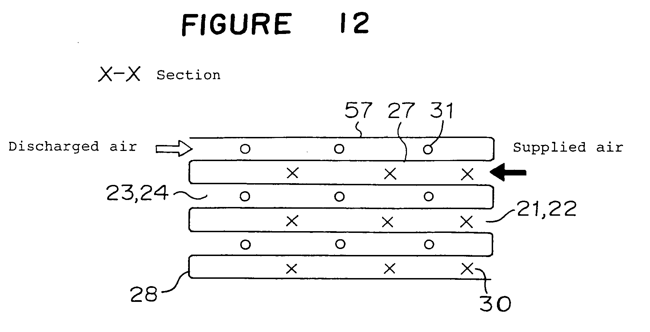

In Figure 9, there is shown a vertical section of a portion of the partition 2 shown in Figure 8, taken along the line IX-IX. As shown in Figure 9, the respective corrugated sections 20 are formed so that the corrugations are repeated upwardly and downwardly on both surfaces with respect to the sheet plane. The tops of the respective corrugations are jointed to the flat surface portions 57 to alternately arrange the supplied air passages 30 and the discharged air passages 31 between the corrugations as shown in Figure 11 and to partition the respective corrugations by the flat surface portions 57. In Figure 10, there is shown a vertical section of a portion of the partition 2 shown in Figure 8, taken along the line X-X. The portion shown in Figure 10 correspond to the flat side portions 29 at the front side and at the rear side in Figure 7, and is shaped to be flat as shown in Figure 12.

Because the heat exchanging element 1 is formed by zigzag bending the partition 2, each layer has one end closed. The side edges of the sheet are closed by the side end seals 25 and 26. Each layer has only an end portion remote from the zigzag bent fold worked as the open end. The heat exchanging element has the respective open ends and the respective zigzag bent folds alternately arranged in the vertical direction. The passages formed by the corrugated sections 20 are the ones that the respective passages have both ends communicated with respective open end portions through both flat portions 29. As shown in Figure 7, the supplied air passages are formed to extend from the supplied air inlet 21 to the supplied air outlet 22 through the corrugated sections 20, and the discharged air passages are formed to extend from the discharged air inlet 23 to the discharged air outlet through the corrugated sections 20.

The second embodiment is identical to the first embodiment except for the arrangement as just stated. The heat exchanging element according to the second embodiment has the same application as the one according to the first embodiment. For example, the heat exchanging element 1 in accordance with the second embodiment can be incorporated into the ceiling mounted and concealed type total heat exchanging unit shown in Figure 6. The total heat exchanging unit with the heat exchanging element 1 of the second embodiment can carry out heat exchange like the one of the first embodiment.

According to the arrangement of the present invention, the partition 2 can be corrugated to increase a heat exchanging area in comparison with the conventional flat partitions, thereby improving heat exchanging efficiency. Since the heat exchanging element is layered by using only the partition, machining and assembly are easy. In addition, the corrugated sections which work as spacers is also contributed to heat exchange to go no waste. In accordance with this embodiment, the corrugated surface portions and the flat surface portions can be alternately layered to joint the tops of the corrugations and the flat surface portions without need for high accuracy. As a result, production and assembly are easy to save cost.

EMBODIMENT 3:

In the first and second embodiments, when a material with poor ductility, such as Japanese paper or converted paper, is used to prepare the partition 2 with the corrugated sections 20, there is danger of occurring a break in the corrugations 20 or in the boarders between the corrugations 20 and the flat side portions 29. In order to avoid the break, the respective corrugations are shaped to have the leading portions in proximity to the flat side portions tapered.

In Figure 13(a), there is shown a plan view of another example of the tapered leading portions. In Figure 13(b), there is shown a vertical section of the portion shown in Figure 13(a). In these figures, reference numeral 210 designates valleys of the corrugations 20. Reference numeral 211 designates mountains of the corrugations 20. Reference numeral 212 designates the valleys 210. Reference numeral 213 designates the tapered leading portions of the mountains 211.

When the corrugations 20 are formed in such a shape, the tapered leading portions 212 and 213 are shaped to converge toward the flat side portions 29 and to have the leading edges angled, thereby clearly dividing the tapered leading portions of the mountains 211 and the valleys 210 from other portions. As a result, it is usually possible to prevent the boarders between the corrugations 20 and the flat side portions 29 from being broken. Since the mountains and the valleys have the tops and the bottoms except for the tapered leading portions formed in an uncurved and flat manner, the corrugations and the flat surface portions which confront each other can be reliably jointed together, and the length of the jointed portions is extended to improve strength.

EMBODIMENT 4:

In the first and second embodiments, when a material with poor ductility, such as Japanese paper or converted paper, is used to prepare the partition 2 with the corrugations 20, the corrugations 20 and the boarders between the corrugations 20 and the flat side portions 29 are liable to be broken on production. There is danger of producing irregular wrinkles on the flat side portions 29 due to poor machining, thereby narrowing the passages formed at the flat side portions 29. This is because the sheet length required for the flat side portions 29 is shorter than that required for the corrugated portion or sections 20 in the partition 2 as seen from Figures 4, 9 and 10.

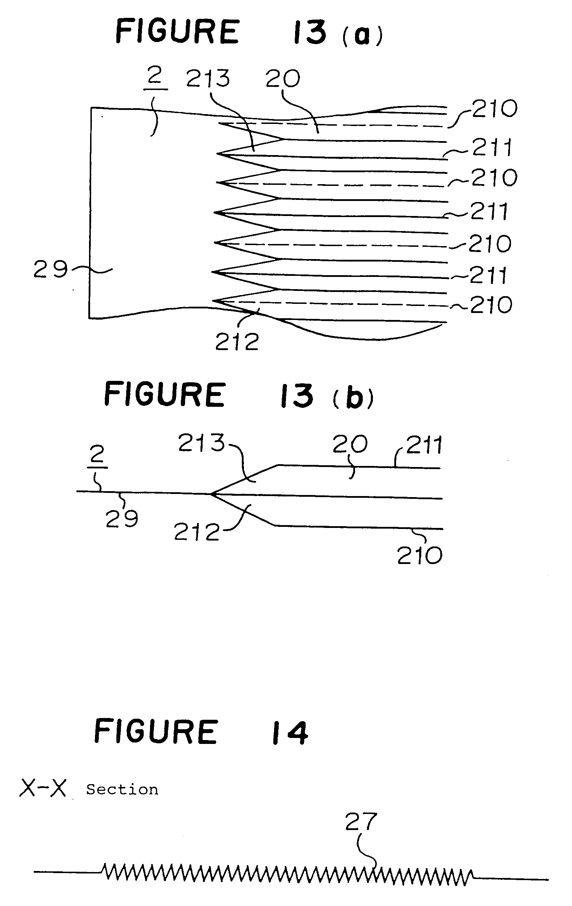

When the flat side portions 29 are formed with small corrugations to have the same sheet length as the corrugated portion or sections 20 as shown in Figure 14, the length of the flat side portion and that of the corrugated portion or sections in the longitudinal direction of the sheet can be equalized to avoid breakage on shaping the corrugated portion or sections, and to sufficiently ensure the passages at the flat side portions 29. In the example shown in Figure 14, the flat side portions 29 are formed in finer corrugations than the corrugated portion or sections 20 so as not to be tall. Required shaping can be easily carried out by pressing the sheet, using rollers with a finely corrugated surface at opposite ends of a corrugating roller for shaping the corrugated portion or sections, or using a corrugating roller integral with rollers with such a finely corrugated surface.

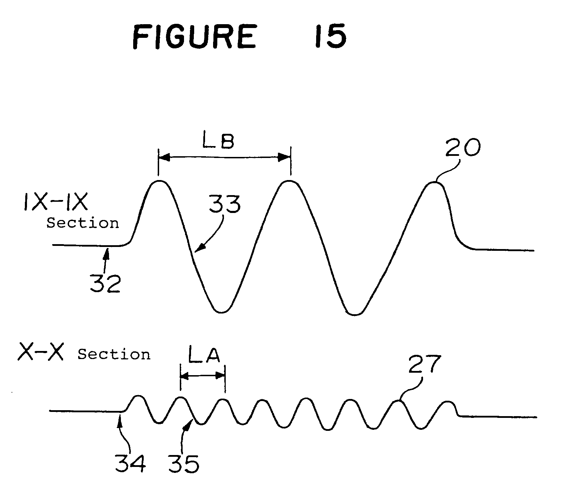

If the vertical directions of the corrugations of the corrugated portion or sections and the flat side portions are opposite at the boarder between the corrugated portion or sections 20 and the flat side portions 29, the sheet gets liable to be broken. In particular, the beginning and the ending of the respective corrugated sections 20 are loaded in a pending direction because the partition 2 itself is zigzag bent. In order to avoid such loading, the distance LB between adjoining tops of the bigger corrugations of the corrugated sections 20 and the distance LA between adjoining tops of the smaller corrugations have a relation which satisfies an equality of $LB = (2n+1)LA$ (n represents a natural number) as shown in Figure 15. By such arrangement, the vertical directions of the corrugations of the corrugated sections 20 and the flat side portions 29 can be identical at the beginning and the ending of the respective corrugated sections, allowing the corrugations to be formed without breaking the partition 2.

EMBODIMENT 5:

In the first to fourth embodiments, the required gap between confronting corrugated portions 20, and the required gap between confronting corrugated surface portion 27 and flat surface portion 57 are held by the corrugations of the corrugated portion or sections 20. However, the flat side portions 29 with the air inlets and outlets have no member for holding a required gap arranged thereon. Even if the flat side portions have the corrugations like the fourth embodiment, the corrugations are too small to hold the required gap. In Figures 16-18, there are shown perspective views of structures to solve such a problem.

In Figure 16, reference numeral 36 designates side corrugated portions which are formed on the flat side portions 29 at the opposite side edges of the sheet, which has the corrugated direction directed to the same as that of the respective corrugated sections 20, and which has the corrugating direction arranged in parallel with the zigzag bent end surfaces. The height of the corrugations of the side corrugated portions 36 is the same as that of the corrugated sections 20. By such arrangement, the gap required between confronting side edges of the partition 2 can be held by the corrugations having the same direction as each corrugated section to provide the required gap with good strength.

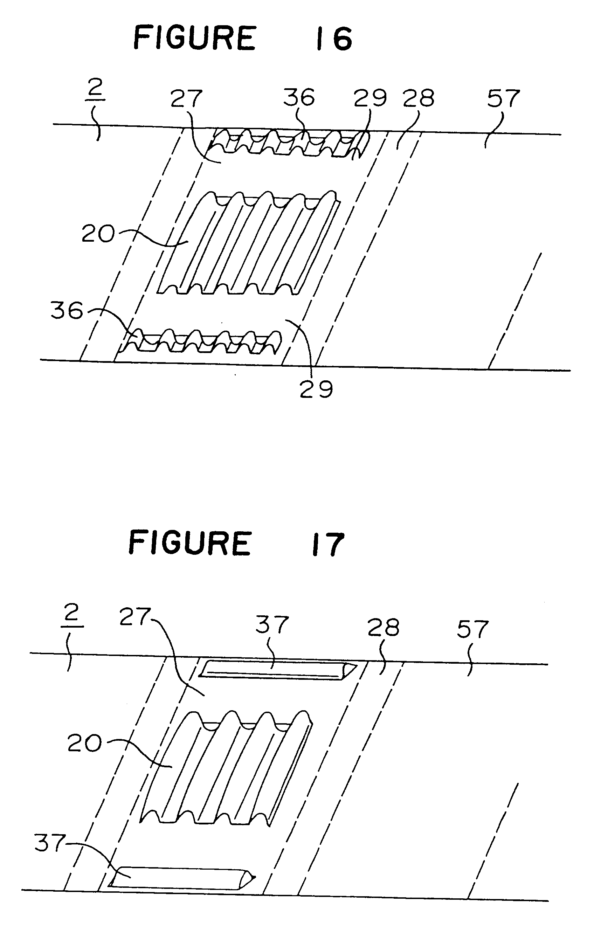

In Figure 17, there is shown another example. In Figure 17, reference numeral 37 designates side corrugated portions which are formed on the flat side portions 29 at opposite side edges of the sheet, which have the corrugating direction arranged perpendicular to that of each corrugated section 20, and which have the corrugating direction arranged in parallel with the zigzag bent end surfaces. The height of the corrugations of the side corrugated portions 37 is the same as that of the corrugated sections 20. By such arrangement, the passages which are formed by the corrugated sections 20 can confront the side surfaces of the corrugations of the side corrugated portions 37 at the opposite side edges of the partition 2 to smoothly direct air from the inlet to the corrugated sections 20 and from the corrugated sections 20 to the outlet due to straightening function, and to minimize resistance in the passages.

In addition, confronting side corrugated portions 37 can be jointed to seal the opposed side edges of the partition 2 to improve airtightness as well as to improve durability of the side end seals 25 and 26.

The shape of the side corrugated portions is not limited to the one just stated. For example, each side corrugated portion may be formed in a single corrugation 370 which has the corrugated direction arranged in the same direction as that of each corrugated section 20, and which has the corrugated direction arranged in parallel with the zigzag bent end surfaces as shown in Figure 18. The side corrugated portions may be formed in another shape.

EMBODIMENT 6:

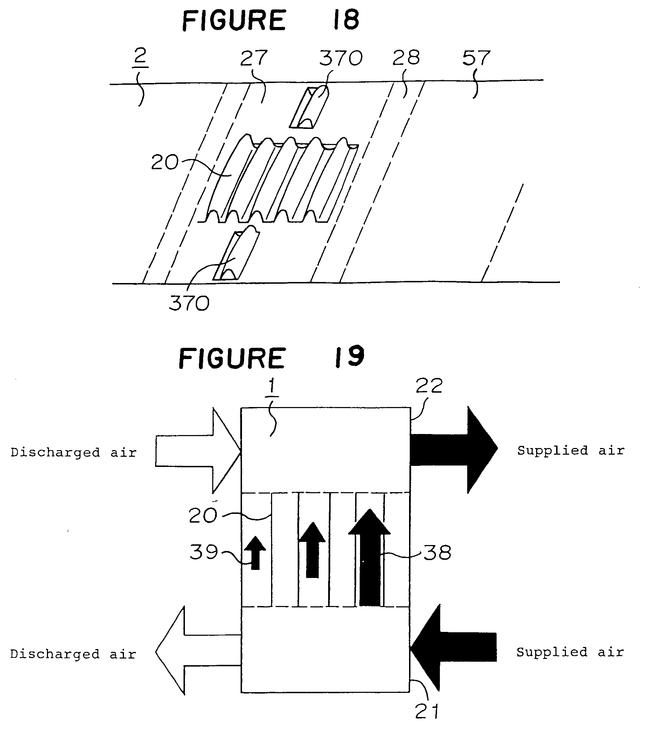

In the first to fourth embodiments, the heat exchanging element 1 has the air inlet and outlet placed 90° from the corrugated portion or sections 20. The respective passages in the respective layers formed by the corrugated portion or sections 20 have a substantially constant cross-sectional area though the respective passages are different from in terms of distance from the air inlet and outlet. Specifically, when the supplied air inlet 21 and the supplied air outlet 22 are arranged on the right side of the heat exchanging element 1 as shown in Figure 19, right-hand passages near to the air inlet and outlet have greater flow rates 38 while left-hand passages far from the air inlet and outlet have smaller flow rates 39.

In this case, the discharged air inlet 23 and the discharged air outlet 24 are arranged on the left side of the heat exchanging element 1 in Figure 19. Left-hand passages near to the discharged air inlet and outlet have greater flow rates while right-hand passages far from the discharged air inlet and outlet have smaller flow rates. As a result, a main portion of the supplied air flows in the right-hand portion of the heat exchanging element, and main portion of the discharged air flows in the left-hand portion of the heat exchanging element, preventing heat exchange from being effectively carried out.

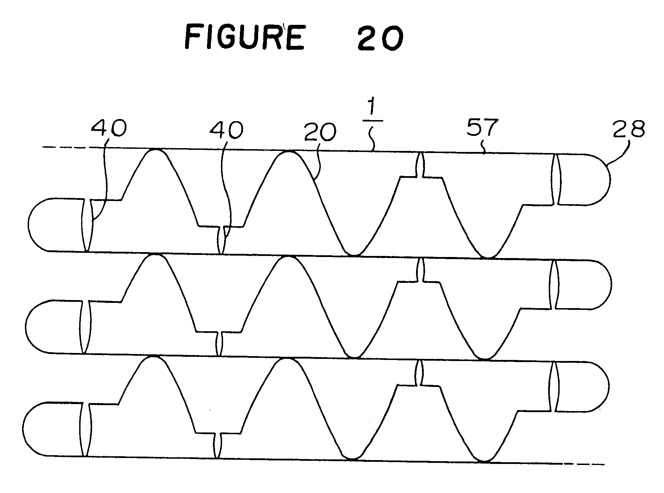

In Figure 20, there is shown a vertical section of the partition 2 to explain the structure to solve this problem. In this figure, reference numeral 40 designates pinched portion of corrugations 20 which are near to the gaps 28 and which are inwardly directed by zigzag bending.

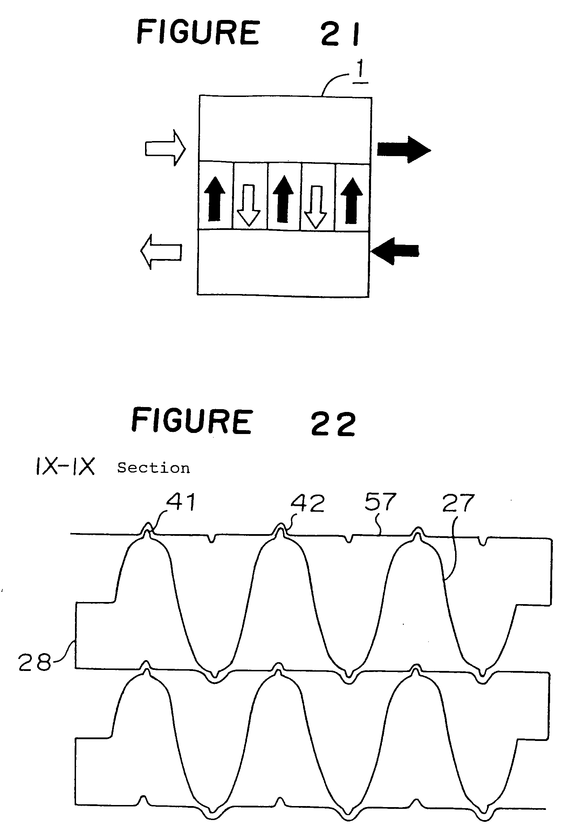

By such arrangement, passages far from the air inlet and outlet have a greater cross-sectional area than passages near to the air inlet and outlet to increase flow rate therein. In the first to fourth embodiments, the passages nearer to the air inlet and outlet have greater flow rates. When the length of the pinched portion is gradually increased as the corrugations approach in each zigzag bent end surfaces as shown in Figure 20, the flow rates in the respective passages can be equalized as shown in Figure 21 to improve heat exchanging efficiency in the heat exchanging element 1 as a whole.

EMBODIMENT 7:

Although in the second embodiment the tops of the respective corrugations of the corrugated sections 20 are jointed to the flat surface portions 57 when the partition 2 is zigzag bent, there is a possibility that the jointing positions are neither equally distributed in the heat exchanging element 1 as a whole nor occupy desired locations to cause insufficient jointing, leading to leakage or damage. There is also a possibility that the resistance in the passages change to lower heat exchanging efficiency. In Figure 22, there is shown a vertical section of an example of the heat exchanging element 1 which can solve this problem. In this figure, reference numeral 41 designates a projection which is formed by pinching the top of each corrugation of the corrugated sections 20. Reference numeral 42 designates convexed portions and concave portions which are formed on the flat surface portions 57 at such locations that the respective tops of the corrugated sections 20 get in tough with the flat surface portions.

By such arrangement, when the partition 2 is zigzag bent in a layered structure, the respective projections 41 can be engaged into and jointed to the corresponding concaved portions 42 of the flat surface portions to produce the heat exchanging element 1 in such a manner that the respective corrugations of the corrugated sections 20 are arranged at desired locations. As a result, it is possible to minimize leakage and avoid breakage. In addition, jointing the corrugated sections 20 and the flat surface portions 57 can be carried out with use of identifications of the concaved portions 42 on production, and the jointing positions can be guided to proper locations to facilitate assembly.

EMBODIMENT 8:

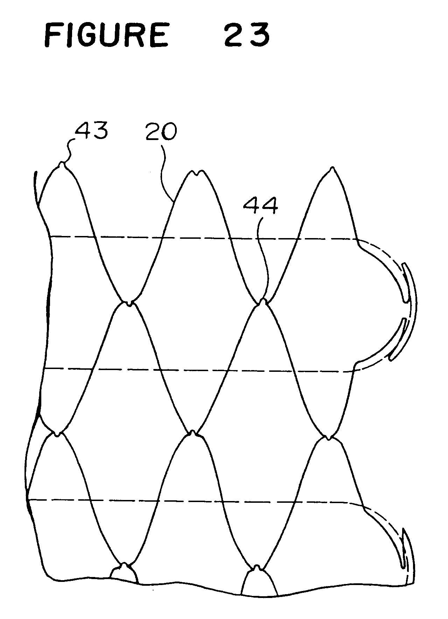

In Figure 23, there is shown a vertical section of a portion of another example of the partition 2 wherein the structure according to the seventh embodiment is applied to the structure according to the first embodiment. In this figure, reference numeral 43 designates convexed portions or concave portions which are formed on the top of each corrugation of the corrugated portion 20 by pinching the top. Adjoining tops are alternately provided with the convexed portion and the concave portion. When the partition is zigzag bent in a layered structure, corrugations which joint together has the convexed portion and the concaved portion engaged each other.

By such arrangement, an advantage similar to the seventh embodiment can be obtained.

EMBODIMENT 9:

In the embodiments stated earlier, the partition 2 may be made of Japanese paper or other paper. When the sheet includes metallic members like composite paper with metallic foil laminated thereon or composite paper with metallic wires or a metallic mesh sandwiched between two sheets, the shaped corrugations can be held by the metallic nature. Use of such metallic members is superior in shaping the corrugations on the partition. The passages can be stably held to improve performance, and the metallic members can naturally improve heat transferring performance to minimize the heat exchanging element. In order to obtain these advantages, aluminum, iron, copper, stainless steel and nickel are suitable in terms of metallic nature.

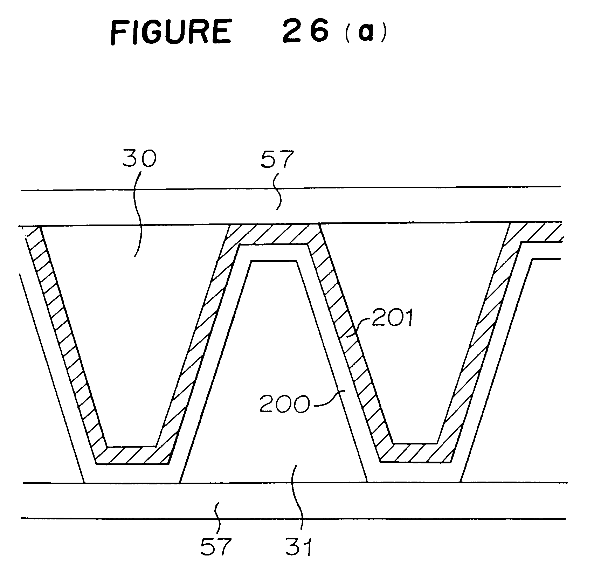

With respect to the shape of such metallic members, foil, an arrangement of thin wires or a mesh having a predetermined width can be adopted. When metallic foil is used (see Figure 26(a)), heat transferring performance can be improved, and the corrugated form can be held to offer a good shape holding force in terms of plane. In Figure 26(a), reference numeral 200 designates a paper sheet, and reference numeral 201 designates the metallic foil. When the metallic members comprise thin wires (see Figure 26(b)), the side portions of the respective corrugation i.e. portions in proximity to the boarders between the corrugations and the flat side portions have the thin wires passed along the longitudinal direction of the corrugations. In such arrangement, the area which is occupied by the metallic members at the corrugations is minimized to sufficiently ensure an are of the partition which works for humid exchange. In addition, a high holding force can be obtained for a long period of time to prevent the corrugations from collapsing at the boarders between the corrugations and the flat side portions. The heat exchanging element becomes lighter by a decrease in portions with the metallic members. In Figure 26(b), reference numeral 200 designates the two paper sheets, and reference numerals 201b designate metallic wires.

When the metallic members have a mesh structure (see Figure 26(c)), the metallic members can offer advantages which are respectively obtained by the foil and the thin wires. The foil, the thin wires and the mesh may be included in all the corrugations, or be arranged in only suitable portions in terms of shape or performance holding. The thickness of the foil, the extending direction of the wires, and the shape of the mesh can be properly determined depending on cases. When the thin wires are used, the portions with the thin wires are not limited to the side portions of the corrugations. The metallic members have appropriate materials in terms of machinability, strength and cost. In Figure 26(c), reference numeral 200 designates the two paper sheets, and reference numeral 201c designates an aluminum mesh.

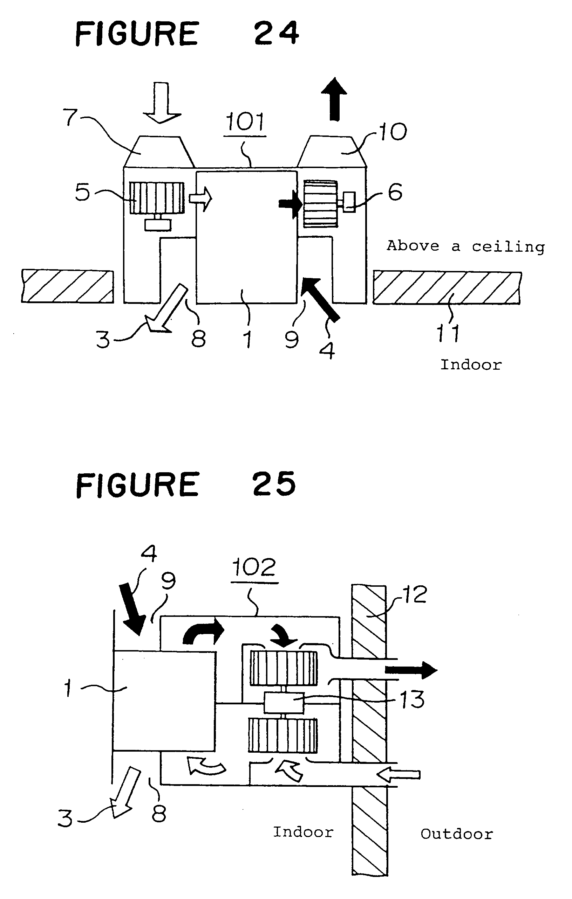

Although the ceiling mounted and concealed type total heat exchanging unit as shown in Figure 6 has been referred to the explanation on the embodiments, the heat exchanging element according to the present invention is applicable to e.g. a cassette type total heat exchanging unit as shown in Figure 24. In that case, the heat exchanging unit 1 according to one of the first to eighth embodiments can be arranged in a central portion of the total heat exchanging unit main body 101 to offer functions and advantages similar to the embodiments. With regard to a home heat exchanging unit as shown in Figure 25 as well, the heat exchanging element 1 can be arranged at a central portion in an indoor side of the home heat exchanging unit main body 102 to offer functions and advantages similar to the embodiments. In Figures 24 and 25, reference numeral 11 designates a ceiling with the cassette type total heat exchanging unit mounted therein. Reference numeral 12 designates a wall with the home heat exchanging unit mounted thereto.

**Claims**

1. A heat exchanging element comprising:

   a sheet (2); and
   a corrugated portion (20) formed on the sheet;
        characterized in that the sheet is zigzag bent in a layered structure to provide a first air flow passage (30) and a second air flow passage (31) which carry out heat exchange therebetween.

2. A heat exchanging element according to Claim 1, characterized in that the corrugated portion (20) is continuously formed on the sheet (2).

3. A heat exchanging element according to Claim 1, characterized in that the sheet (2) comprises corrugated surface portions (27) and flat surface portions (57), each corrugated surface portion having the corrugated portion (20) formed thereon, the corrugated surface portions and the flat surface portions being alternately layered.

4. A heat exchanging element according to Claim 1, characterized in that the corrugated portion (20) has corrugations formed at predetermined intervals.

5. A heat exchanging element according to any one of Claims 1 to 4, characterized in that bent end surfaces of the sheet (2) which is zigzag bent are in parallel with the passages (30,31) formed at the corrugated portion (20).

6. A heat exchanging element according to any one of Claims 1 to 4, characterized in that the sheet (2) has a surface (29) in parallel with a corrugating direction of the corrugated portion (20) formed with smaller corrugations than the corrugated portion.

7. A heat exchanging element according to Claim 6, characterized in that the number of the smaller corrugations is odd times that of the corrugations of the corrugated portion (20).

8. A heat exchanging element according to any one of Claims 1 to 4, characterized in that the corrugated portion (20) has corrugations formed so that the first and second passages (30,31) formed by the corrugated portion can have air flows equalized therein.

9. A heat exchanging element according to Claim 8, characterized in that the corrugated portion (20) has the respective corrugations pinched to be crushed by a predetermined length from the top of the respective corrugations over the entire length of the passages (30,31).

10. A heat exchanging element according to Claim 9, characterized in that the corrugated portion (20) has the respective corrugations formed so that one of adjoining passages (30,31) has a longer pinched portions (40) than the other passage.

# FIGURE I

# FIGURE 2

EP 0 777 094 A2

# FIGURE 3

# FIGURE 4

IV - IV Section 29 20

# FIGURE 5

III - III Section

# FIGURE 6

# FIGURE 7

FIGURE    8

# FIGURE    9

IX-IX Section

20

# FIGURE    10

X-X Section

29

# FIGURE    II

IX-IX Section

57    20    27    31

28

30

# FIGURE 12

X-X Section

57 27 31

Discharged air ⟹ ○ ○ ○    Supplied air ⬅

23,24 ○ ○ ○

21,22

○ ○ ○

28

30

# FIGURE 13 (a)

## 2 213 20

210
211
210
211
210
211
210

29

212

# FIGURE 13 (b)

213 20 211

2

29 212

210

# FIGURE 14

X-X Section

27

# FIGURE 15

IX-IX Section

X-X Section

# FIGURE 16

# FIGURE 17

## FIGURE 18

## FIGURE 19

Discharged air → Supplied air

Discharged air ← Supplied air

FIGURE 20

# FIGURE 21

# FIGURE 22

IX-IX Section

# FIGURE 23

# FIGURE 24

7 101 10

5 6

Above a ceiling

3 8 1 9 4 11

Indoor

# FIGURE 25

4 102
9 12

1

13

3 8

Indoor Outdoor

# FIGURE 26 (a)

# FIGURE 26 (b)

# FIGURE 26 (c)

57

200

201c

200

57

FIGURE 27

# FIGURE 28

# FIGURE 29

# FIGURE 30